# EUROPEAN PATENT APPLICATION

(11) **EP 2 207 101 A1**
(43) Date of publication of application: **14.07.2010**
(21) Application number: 10250056.8
(22) Date of filing: 13.01.2010
(51) Int. Cl.: G06F 13/38

(54) **Method and device for parallel interfacing**

(30) Priority: 13.01.2009 KR 20090002745
(71) Applicant: Samsung Electronics Co., Ltd., Suwon-si Gyeonggi-do 443-742 (KR)
(72) Inventor: Kumar, Ganesansathish, Gyeonggi-do (KR); Chung, Jin Yong, Seoul (KR)
(74) Representative: Mounteney, Simon James

(57) **Abstract**

A media access control (MAC)-physical layer (PHY) interfacing. The method comprises transmitting a PHY register address to the PHY through a parallel data bus in an address phase, and transmitting a write data to the PHY through the parallel data bus or the receiving a read data output from the PHY through the parallel data bus in a data phase.

## Description

### BACKGROUND

Embodiments of the present inventive concept relate to an interfacing technology, and more particularly, to a MAC-PHY interfacing method and devices for performing the method.

The MAC-PHY interface specification 1.02 distributed on May 3, 2007 is combined as a reference.

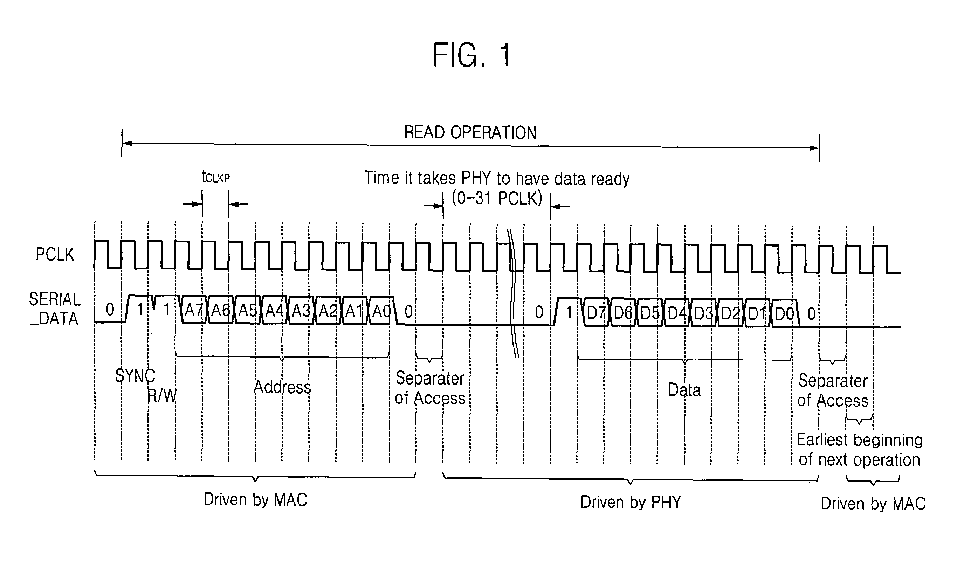

FIG. 1 illustrates a timing diagram of a serial read operation of a general management interface. Referring to FIG. 1, a media access control (MAC) transmits a PHY register address A[7:0] to a Physical layer (PHY) through a serial data line SERIAL_DATA for a serial operation. Then, the PHY transmits a PHY resister data D[7:0] to the MAC through the serial data line SERIAL_DATA.

During a first part of transaction, the MAC transmits a bit SYNC "1" for indicating start of a PHY register read operation, a bit R/W "1" for indicating a serial read operation, a 8-bit PHY register address A[7:0], and a bit "0" indicating termination of the first part of the transaction to the PHY through the serial data line SERIAL_DATA successively. The PHY transmits a bit "0" to the MAC through the serial data line SERIAL_DATA during a period from 0 clock cycle 0*t_{CLKP} to 31 clock cycles 31*t_{CLKP} before transmitting the PHY register data D[7:0] to the MAC.

During a second part of the transaction, the PHY transmits a bit "1" indicating start of a PHY register data, 8-bit PHY register data D[7:0], and a bit "1" indicating termination of the second part of the transaction to the MAC successively through the serial data line SERIAL_DATA. As illustrated in FIG. 1, to perform a serial read operation, a clock cycle t_{CLKP} consumed in the MAC or the PHY is 52 clock cycles(52=11+31+10) at a worst case or 22 clock cycles(22=11+1+10) at a best case.

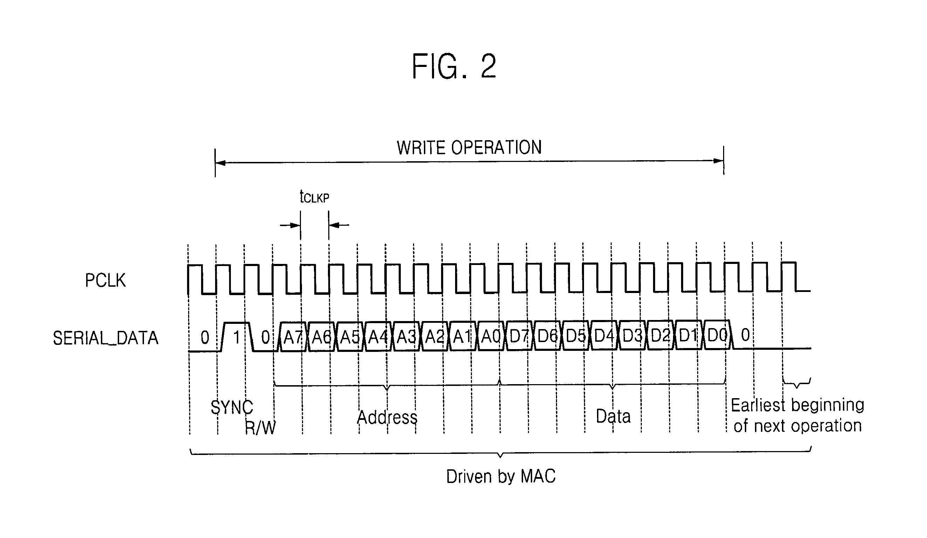

FIG. 2 illustrates a timing diagram of a serial write operation of a general management interface. Referring to FIG. 2, during a transaction, a MAC transmits a bit SYNC "1" for indicating start of a PHY register write operation, a bit R/W "0" for indicating a serial write operation, 8-bit PHY register address A[7:0], 8-bit write data D[7:0], and a bit "0" indicating termination of the transaction to a PHY successively through the serial data line SERIAL_DATA.

As illustrated in FIG. 2, to perform a serial write operation, a clock cycle t _{CLKP} consumed in the MAC or the PHY is 19 clock cycles(19*t _{CLKP}), i.e., 19=10+0+9. As explained referring to FIGS. 1 and 2, the MAC and the PHY consumes a lot of power to perform a serial read/a serial write operation. Additionally, the MAC and the PHY requires a serial-to-parallel converter (not shown) and a parallel-to-serial converter (not shown) to exchange PHY register data and a PHY register address. Accordingly a lot of logics and gate count are required to embody the serial-to- parallel converter and the parallel-to-serial converter,

### SUMMARY

The present general inventive concept provides a method of parallel interfacing, which may consume a less power and reduce unnecessary logics and unnecessary gate count, and devices performing the method.

An example embodiment of the present invention is provided to a media access control (MAC)-physical layer (PHY) interfacing method, comprising transmitting, by the MAC, a PHY register address to the PHY through a parallel data bus in an address phase, and transmitting, by the MAC, a write data to the PHY through the parallel data bus or receiving, by the MAC, a read data output from the PHY through the parallel data bus in a data phase. The MAC transmits the PHY register address and the write data to the PHY within two clock cycles.

An example embodiment of the present invention is provided to a media access control (MAC)-physical layer (PHY) interfacing method, including receiving, by the PHY, a PHY register address output from the MAC through a parallel data bus in a address phase, and the receiving, by the PHY, a write data output from the MAC through the parallel data bus or transmitting, by the PHY, a read data to the MAC through the parallel data bus in a data phase.

The PHY transmits the read data to the MAC within a clock cycle.

An example embodiment of the present invention is provided to a semiconductor device, including a register; and a write circuit for writing a write data, which is input through the parallel data bus in a data phase, to a first storing region of the register, which is designated by a write address input through the parallel data bus in an address phase.

The address phase and the data phase are performed within a clock cycle respectively. The write circuit includes a first logic gate for logically operating an initializing enable signal and a read/write signal, a transmission control circuit for controlling transmission of a signal input through the parallel data bus in response to an output signal of the first logic gate, and a de-multiplexer for transmitting an output signal of the transmission control circuit to the register or an internal circuit in response to an output signal of the first logic gate.

The semiconductor device may further include a read circuit for reading data stored in a second storing region of the register in the data phase, which is designated by a read address input through the parallel data bus in the address phase, and transmitting a read data to an external device through the parallel data bus.

The read circuit includes a first logic gate for logically operating an initializing enable signal and a read/write signal, a de-multiplexer controlling transmission of the read data or data output from an internal circuit in response to an output signal of the first logic gate, and a transmission control circuit for controlling transmitting an output signal of the de-multiplexer to the parallel data bus in response to an output signal of the first logic gate.

An example embodiment of the present invention is provided to a media access control (MAC)-physical layer (PHY) interface, including a parallel data bus for transmitting a write data output from the MAC to the PHY or transmitting a read data output from the PHY to the MAC in a data phase, a first signal line for transmitting a read/write signal output from the MAC to the PHY. The interface further comprises a second signal line for transmitting an initializing enable signal, which is output from the MAC and indicates an initializing operation or a normal operation, to the PHY. The address phase and the data phase are performed in a clock cycle respectively.

An example embodiment of the present invention is directed to a system, including a MAC outputting an address, a read/write signal, an initializing enable signal, and a write data; a PHY outputting a read data; and an interface connected between the MAC and the PHY.

The interface includes a parallel data bus for transmitting the address to the PHY in an address phase, and transmitting the write data to the PHY or transmitting the read data to the MAC in a data phase, a first signal line for transmitting the read/write signal to the PHY, and a second signal line for transmitting the initializing enable signal to the PHY.

An example embodiment of the present invention is directed to a signal process method of a MAC during a write operation, including transmitting, by the MAC, a write address to a PHY through a parallel data bus during a first cycle of a clock signal and transmitting, by the MAC, a write data to a PHY through the parallel data bus during a second cycle of the clock signal.

An example embodiment of the present invention is directed to a signal process method of the PHY during a read operation, including receiving, by the PHY, a read address through a parallel data bus during a cycle of a clock signal and transmitting a read data output from a register designated by the read address to the MAC through the parallel data bus during a cycle of the clock signal after a data bus turnaround time is passed. The data bus turnaround time is from a cycle of the clock signal to 31 cycles of the clock signal.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 illustrates a timing diagram of a serial read operation of a general management interface;

FIG. 2 illustrates a timing diagram of a serial write operation of a general management interface;

FIG. 3 illustrates a schematic block diagram of a system including a MAC-PHY interface according to an example embodiment;

FIG. 4 illustrates a block diagram showing an example embodiment of a PHY illustrated in FIG. 3;

FIG. 5 illustrates a circuit diagram of a detection circuit illustrated in FIG. 4;

FIG. 6 illustrates an example embodiment of a timing diagram of initializing operations using a MAC-PHY interfacing method of a system including a PHY illustrated in FIG. 4;

FIG. 7 illustrates another example embodiment of a timing diagram of initializing operations using a MAC-PHY interfacing method including a PHY illustrated in FIG. 4;

FIG. 8 illustrates still another example embodiment of a timing diagram of initializing operations using a MAC-PHY interfacing method of a system including a PHY illustrated in FIG. 4;

FIG. 9 illustrates still another example embodiment of a timing diagram of initializing operations using a MAC-PHY interfacing method of a system including a PHY illustrated in FIG. 4;

FIG. 10 illustrates an example embodiment of a timing diagram of an initializing operation and a normal transmitting operation using a MAC-PHY interfacing method of a system including a PHY illustrated in FIG. 4;

FIG. 11 illustrates another example embodiment of a timing diagram of an initializing operation and a normal transmitting operation using a MAC-PHY interfacing method of a system including a PHY illustrated in FIG. 4;

FIG. 12 illustrates a block diagram showing another example embodiment of a PHY illustrated in FIG. 3;

FIG. 13 illustrates an example embodiment of a timing diagram of initializing operations using a MAC-PHY interfacing method of a system including a PHY illustrated in FIG. 12;

FIG. 14 illustrates an example embodiment of a timing diagram of an initializing operation and a normal transmitting operation using a MAC-PHY interfacing method of a system including a PHY illustrated in FIG. 12; and

FIG. 15 illustrates another example embodiment of a timing diagram of an initializing operation and a normal transmitting operation using a MAC-PHY interfacing method of a system including a PHY illustrated in FIG. 12.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

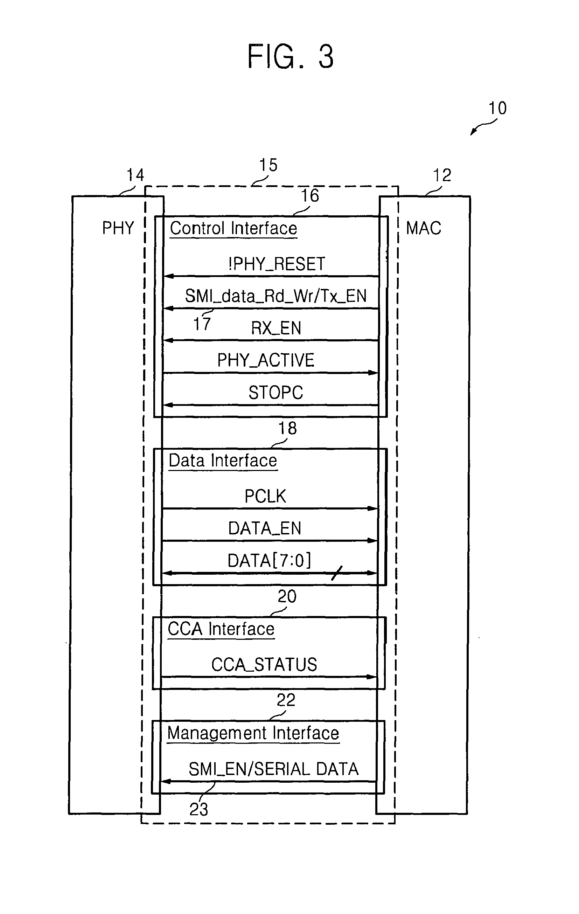

FIG. 3 illustrates a schematic block diagram of a system including a MAC-PHY interface according to an example embodiment. Referring to FIG. 3, a WiMedia-based system 10 includes Medium Access Control (MAC) 12, Physical Layer (PHY) 14, and an interface 15 connected between the MAC 12 and the PHY 14. The system 10 may be a consumer electronic (CE), a handset including a mobile communication device, a PC, communication system, or data processing system. According to embodiments, the system 10 may be embodied as a semiconductor chip or a System on Chip (SoC). In addition, the MAC 12 and the PHY 14 may be respectively embodied as a separate semiconductor chip.

The interface 15 includes a control interface 16, a data interface 18 including 8-bit data bus DATA[7:0], a Clear Channel Assessment (CCA) interface 20, and a management interface 22. Each signal line where each interface signal !PHY_RESET, SMI_data_Rd_Wr/TX_EN, RX_EN, PHY_ACTIVE, STOPC, PCLK, DATA_EN, CCA_STATUS, and SMI_EN/SERIAL_DATA is transmitted may have one-bit width.

The 8-bit data bus DATA[7:0] is illustrated in FIG. 3, however, a data bus, which is used for transmitting a PHY register address or a PHY resister data during an initializing operation of embodiments, is not restricted to thereto.

To initialize a PHY register of the PHY 14 or vendor specific registers, the MAC 12 may perform an operation of writing(hereinafter: initializing write operation) the PHY register data(hereinafter: write data) on the PHY register or an operation of reading(hereinafter: initializing read operation) the PHY register data(hereinafter: read data) stored in the PHY register.

The initializing write operation and the initializing read operation are called an initializing operation or a PHY register initializing operation. An initializing write operation may be called a parallel SMI write operation and an initializing read operation may be called a parallel SMI read operation in some embodiments. Accordingly, an initializing operation may be called a Software Management Interface (SMI) operation.

During an initializing operation, a transmission enable signal TX_EN is transmitted from the MAC 12 to the PHY 14 through a signal line 17 of the control interface 16. In addition, the PHY register address and the PHY register data are transmitted through a data bus DATA[7:0] during an initializing operation, and a payload header and a payload data are transmitted through the data bus DATA[7:0] during a normal operation.

During a serial read operation of FIG. 1 or a serial write operation of FIG. 2, a serial data line SERIAL_DATA 23 used for transmitting a serial data may be used as a dedicated signal line for transmitting an initializing enable signal SMI_EN according to embodiments. Accordingly, the initializing enable signal SMI_EN may be enabled during an initializing operation and disabled during a normal operation.

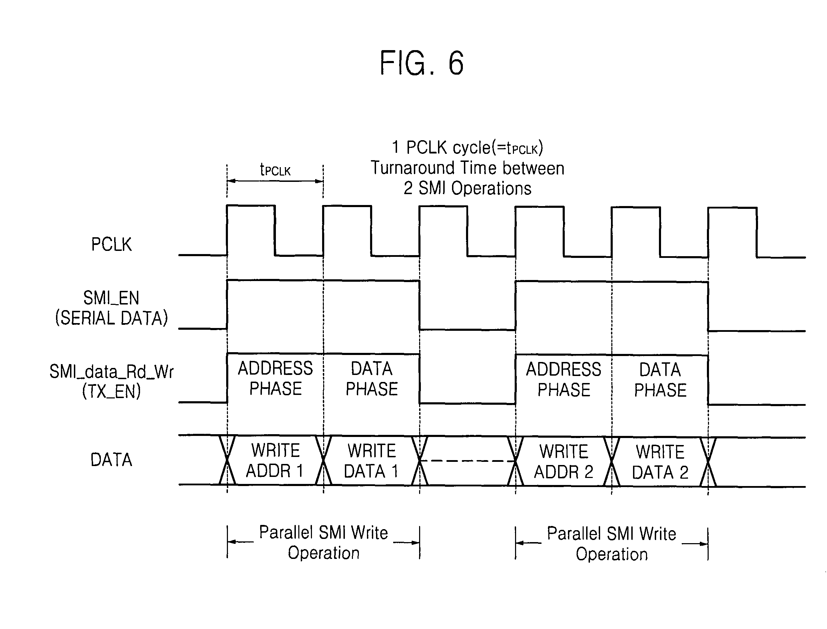

As illustrated in FIGS. 6 to 15, a part of transaction where each PHY register address WRITE ADDR1, WRITE ADDR2, READ ADDR1, READ ADDR2, Write Addr and Read Addr is transmitted is called an address phase, and a part of the transaction where each PHY register data WRITE DATA1, WRITE DATA2, READ DATA1, READ DATA2, Write Data, and Read Data is transmitted is called a data phase during an initializing operation.

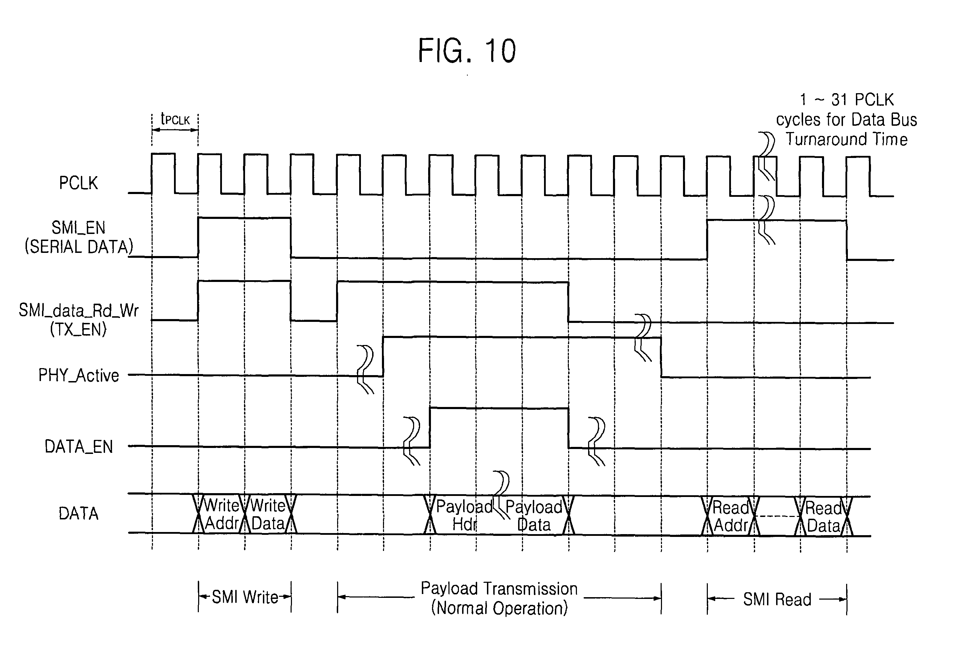

During the address phase of the initializing operation, the data bus DATA[7:0] transmits the PHY register address, e.g., a write address or a read address. The data bus DATA[7:0] may transmit the PHY register data, e.g., a write data or a read data, in the data phase of the initializing operation. In addition, as illustrated in FIGS. 10, 11, 14 and 15, the data bus DATA[7:0] may transmit data (or, frame) including a payload header and a payload data during a normal transmitting operation and a normal receiving operation.

The PHY reset signal !PHY_RESET for clearing all variables PHY 14 and resetting the PHY 14 to an initial state is output from the MAC 12 to the PHY 14. The PHY reset signal !PHY_RESET is asynchronous to a clock signal PCLK and is active low.

The read/write signal SMI_data_Rd_Wr for indicating an initializing read operation/initializing write operation during an initializing operation is transmitted from the MAC 12 to the PHY 14 through a signal line 17. Additionally, a transmission enable signal TX_EN for placing the PHY 14 in a transmit state during a normal operation is transmitted from the MAC 12 to the PHY 14 through the signal line 17. The transmission enable signal TX_EN except a sleep state is synchronized to the clock signal PCLK and is active high. A receiving enable signal RX_EN for placing the PHY 14 in a receive state during a normal operation is transmitted from the MAC 12 to the PHY 14. The receiving enable signal RX_EN except a sleep state is synchronized to the clock signal PCLK and is active high.

The PHY active signal PHY_ACTIVE indicating whether the PHY 14 transmits a frame or receives a frame is transmitted from the PHY 14 to the MAC 12. In a transmit state, a rising edge of the PHY active signal PHY_ACTIVE indicates start of frame transmission at a local antenna(not shown) and a falling edge of the PHY active signal PHY_ACTIVE indicates entire frame is transmitted over the air. Moreover, in a receive state, a rising edge of the PHY active signal PHY_ACTIVE indicates that a beginning of preamble is detected and a falling edge of the PHY active signal PHY_ACTIVE indicates entire frame is received at a local antenna. The PHY active signal PHY_ACTIVE is synchronized with a clock signal PCLK and is active high.

The on/off signal STOPC indicates on/off of a clock signal PCLK in a standby state. When the on/off signal STOPC is not output from the MAC 12 to the PHY 14, a clock signal PCLK becomes active, when the on/off signal STOPC is output to the PHY 14, the clock signal PCLK does not become active. The on/off signal STOPC is an optional signal.

The data enable signal DATA_EN output from the PHY 14 to the MAC 12 is used to require more data from the MAC 12 in a transmit state and is used to indicate to the MAC 12 that a valid data is on the data bus DATA[7:0] in a receive state. The data enable signal DATA_EN is synchronized to a clock signal PCLK and is active high.

The PHY 14 may output a CCA status indicating signal CCA_STATUS for indicating a Clear Channel Assessment (CCA) status to the MAC 12 by using a signal line of a CCA interface 20. The CCA status indicating signal CCA_STATUS is synchronous to a clock signal PCLK and is active high. The MAC 12 according to embodiments of the present invention may transmit an initializing enable signal SMI_EN for indicating an initializing operation or a normal operation to the PHY 14 through a signal line 23 of a management interface 22.

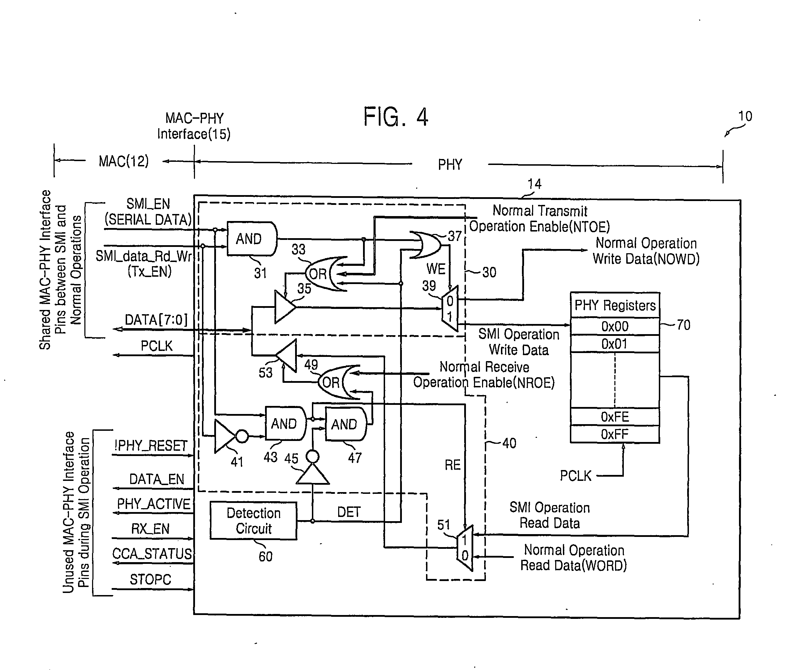

FIG. 4 illustrates a block diagram of a PHY illustrated in FIG. 3. Referring to FIGS. 3 and 4, a system 10 includes a MAC 12, a PHY 14, a MAC-PHY interface 15 connected between the MAC 12 and the PHY 14 and interfacing interface signals. The PHY 12 includes a write circuit 30, a read circuit 40, a detection circuit 60, and a PHY register 70.

In a address phase of an initializing write operation, the write circuit 30 receives and decodes a write address input through a data bus DATA[7:0]. In a data phase of the initializing write operation, the write circuit 30 writes a write data input through the data bus DATA[7:0] on the PHY register 70 designated by a decoded write address.

In an address phase of an initializing read operation, the write circuit 30 receives and decodes a read address input through the data bus DATA[7:0]. And, a read circuit 40 reads a read data stored in the PHY register 70 designated by a decoded read address and transmits read data to the MAC 12 through the data bus DATA[7:0] in a data phase of the initializing read operation.

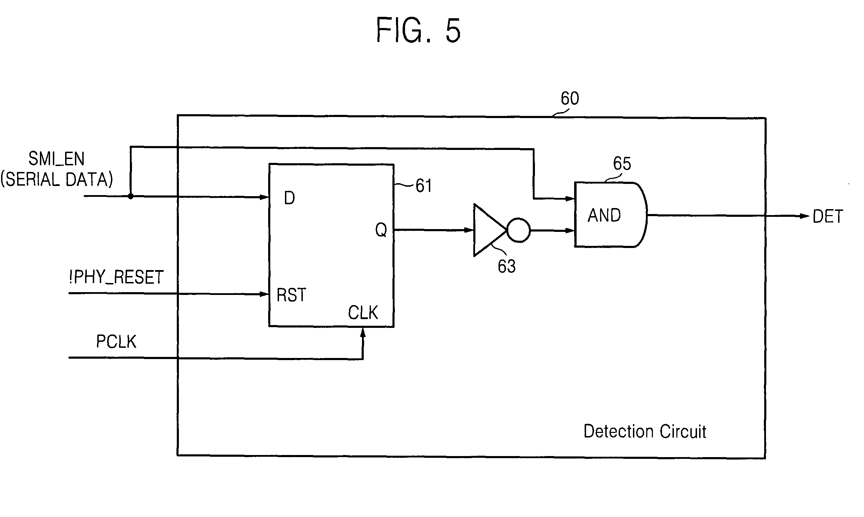

FIG. 5 illustrates a circuit diagram of a detection circuit illustrated in FIG. 4. The detection circuit 60 includes a latch circuit 61 including an input terminal D receiving an initializing enable signal SMI_EN and an output terminal Q for outputting a latch signal Q, a third inverter 63, and a fourth AND gate 65. The latch circuit 61 is initialized in response to a PHY reset signal !PHY_RESET and outputs an output signal according to a level of an initializing enable signal SMI_EN to a third inverter 63 in response to a clock signal PCLK.

The detection circuit 60 detects a level of the initializing enable signal SMI_EN in response to the clock signal PCLK and outputs a detection signal DET. For example, the detection circuit 60 outputs a detection signal DET having a high level in an address phase and outputs a detection signal DET having a low level in a data phase. In addition, the detection circuit 60 outputs a detection signal DET having a low level during a normal operation.

FIG. 6 illustrates an example embodiment of a timing diagram of initializing operations using a MAC-PHY interfacing method of the system including the PHY illustrated in FIG. 4. For example, FIG. 6 illustrates a timing diagram of two initializing operations, e.g., a first initializing write operation and a second initializing write operation, which are performed successively. There is also turnaround time between the first initializing write operation and the second initializing write operation. The turnaround time corresponds to a period t_{CLKP} of a clock signal PCLK or a clock cycle.

Referring to FIGS. 3 to 6, an initializing write operation or a parallel SMI write operation may be explained as follows. First of all, an address phase of the first initializing write operation may be explained as below. The normal transmission operation enable signal NTOE and the normal receiving operation enable signal MROE become a low level in the initializing write operation. When the initializing enable signal SMI_EN is a high level, each initializing write operation is performed. The read/write signal SMI_data_Rd_Wr keeps a high level in the address phase and the data phase. Accordingly, an input driver 35 of the write circuit 30 is enabled and an output driver 53 of the read circuit 40 is disabled according to a read/write signal SMI_data_Rd_Wr having a high level.

When the read/write signal SMI_data_Rd_Wr having a high level is input from the MAC 12 to the first AND gate 31 of the PHY 14, the first AND gate 31 outputs an output signal having a high level.

The latch circuit 61 of the detection circuit 60 of FIG. 5 outputs a signal having a low level to an input terminal of the third inverter 63 through an output terminal Q having a low level in response to an initializing enable signal SMI_EN having a high level and a clock signal PCLK. The fourth AND gate 65 outputs a detection signal DET having a high level according to an initializing enable signal SMI_EN having a high level and an output signal of the third inverter 63 having a high level. The first OR gate 33 outputs an output signal having a high level in response to an output signal of the first AND gate 31 having a high level, a detection signal SET having a high level, and a normal transmission operation enable signal NTOE having a low level.

The input driver 35 connected to a data bus DATA[7:0] is enabled in response to an output signal of the first OR gate 35 having a high level. Accordingly, the input driver 35 may transmit a write address WRITE ADDR1 input through the data bus DATA[7:0] to a first de-multiplexer 39. The second OR gate 37 may output a write enable signal WE having a high level in response to an output signal of the first AND gate 31 having a high level and a detection signal DET having a high level.

The first de-multiplexer 39 may transmit the write address WRITE ADDR1 output from the input driver 35 to the PHY register 70 in response to a write enable signal WE having a high level. According to embodiments, the write circuit 30 may further include a decoder (not shown) for decoding the write address WRITE ADDR1 output from the first de-multiplexer 39.

Continuously, a data phase of an initializing write operation may be explained as below.

Since a latch circuit 61 of a detection circuit 60 of FIG. 5 outputs a signal having a high level to an input terminal of a third inverter 63 in response to a clock signal PCLK, a fourth AND gate 65 may output the detection signal DET having a low level in response to an initializing enable signal SMI_EN having a high level and an output signal of the third inverter 63 having a low level.

The first OR gate 33 outputs an output signal having a high level in response to an output signal of the first AND gate 31 having a high level, the detection signal DET having a low level, and the normal transmission operation enable signal NTOE having a low level. Subsequently, the input driver 35 is enabled in response to an output signal of the first OR gate 33 having a high level. The input driver 35 may transmit a write data WRITE DATA1 input through a data bus DATA[7:0] to the first de-multiplexer 39.

A second OR gate 37 outputs a write enable signal WE having a high level to the first de-multiplexer 39 in response to an output signal of the first AND gate 31 having a high level and the detection signal DET having a low level.

The first de-multiplexer 39 may transmit a write data WRITE DATA1 input through the input driver 35 to the PHY register 70 in response to the write enable signal WE having a high level. According to embodiments, a write circuit 30 may further include a write driver(not shown) for writing a write data WRITE DATA1 on the PHY register 70 designated by a write address WRITE ADDR1. The input driver 35 and an output driver 53 may be respectively embodied as a buffer circuit, an example of a transmission control circuit.

As illustrated in FIG. 6, an address phase and a data phase may be respectively performed in a period t_{CLKP} of a clock signal PCLK or in one clock cycle. Accordingly, a first initializing write operation may be performed in two periods 2*t_{CLKP} of a clock signal PCLK or in two clock cycles.

Referring to FIGS. 2 and 6, a clock cycle of a clock signal PCLK consumed in the MAC and the PHY to perform a serial write operation illustrated in FIG. 2 is 19 clock cycles, and a cycle of the clock signal PCLK consumed in the MAC 12 and the PHY 14 to perform an initializing write operation according to embodiments of the present invention is two clock cycles. Therefore, a power consumed in the MAC12 and the PHY 14 using a MAC-PHY interfacing method of the present invention is considerably reduced compared to a power consumed in the MAC and the PHY using a MAC-PHY interfacing method illustrated in FIG. 2.

Additionally, access time for accessing the PHY register 70 in the system 10 using the MAC-PHY interfacing method according to embodiments of the present invention is considerably reduced compared to access time of a system using a MAC-PHY interfacing method illustrated in FIG. 2. Accordingly, booting time of the PHY 14 for initializing the PHY register 70 is considerably reduced compared to PHY booting time of a system using a MAC-PHY interfacing method illustrated in FIG. 2.

Since a write address WRITE ADDR1 and a write data WRITE DATA1 are transmitted in parallel through the data bus DATA[7:0] in an address phase and a data phase of an initializing operation, the MAC 12 and the PHY 14 does not require a serial-to-parallel converter and a parallel-to-serial converter respectively. Since not including logics such as the serial-to-parallel converter and the parallel-to-serial converter, the MAC 12 and the PHY 14 may have a reduced size. Therefore, by eliminating logics such as the serial-to-parallel converter and the parallel-to-serial converter, gate count of the MAC 12 and the PHY 14 is reduced. In addition, as the logics are eliminated in the MAC 12 and PHY 14, a power consumed in the MAC 12 and the PHY 14 is decreased.

As illustrated in FIG. 6, when two initializing write operations are performed successively, a clock cycle of turnaround time is needed between a first initializing write operation and a second initializing write operation. During the turnaround time, the initializing enable signal SMI_EN is a low level.

After each initializing write operation is finished, the MAC 12 outputs the initializing enable signal SMI_EN having a low level to the PHY 14 to indicate to the PHY 14 that each initializing write operation is finished. Since the second initializing write operation is substantially the same as the first initializing write operation, it may be explained simply as below.

A write address WRITE ADDR2 output from the MAC12 is transmitted to the PHY register 70 in a cycle of a clock signal PCLK in an address phase, and a write data WRITE DATA2 output from the MAC 12 is written on the PHY register 70 designated by the write address WRITE ADDR2 in a cycle of the clock signal PCLK in a data phase.

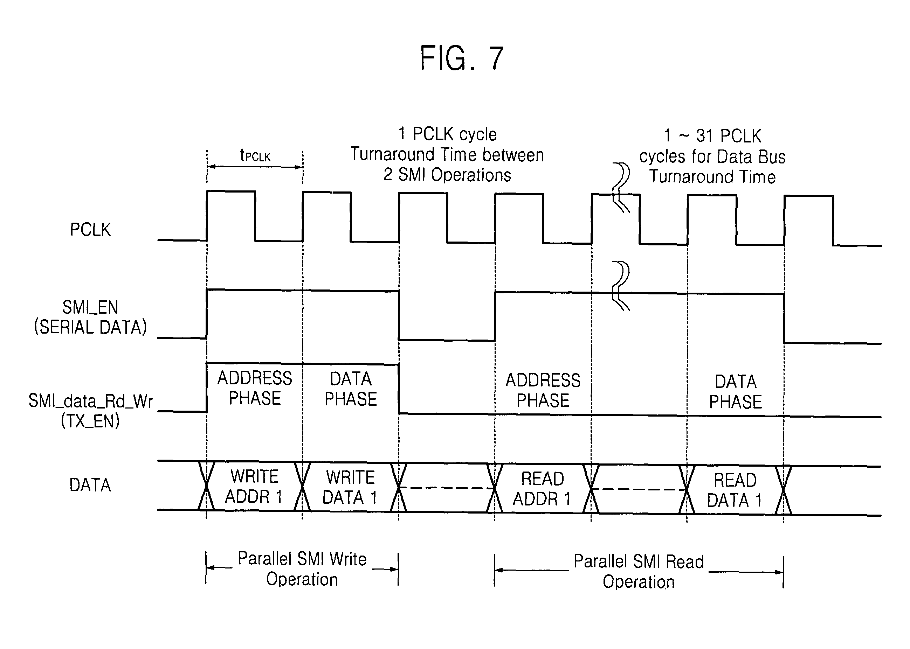

FIG. 7 illustrates another example embodiment of a timing diagram of initializing operations using a MAC-PHY interfacing method of a system including the PHY illustrated in FIG. 4. FIG. 7 illustrates a timing diagram of two initializing operations, i.e., an initializing write operation and an initializing read operation, performed successively. There is turnaround time for indicating termination of the initializing write operation to the PHY 14. The turnaround time corresponds to a cycle of the clock signal PCLK.

Since the initializing write operation illustrated in FIG. 7 is substantially the same as an initializing write operation illustrated in FIG. 6, an explanation thereof is omitted. Accordingly, referring to FIGS. 3, 4, 5, and 7, an initializing read operation is explained as follows. When an initializing enable signal SMI_EN is a high level, an initializing read operation is performed. A read/write signal SMI_data_Rd_Wr in an address phase and a data phase has a low level.

First of all, an operation of the PHY 14 in the address phase may be explained as follows. An input driver 35 of a write circuit 30 is enabled in response to a detection signal DET having a high level, and an output driver 53 of a read circuit 40 is disabled in response to a detection signal DET having a high level. However, the input driver 35 of the write circuit 30 is disabled in response to a detection signal DET having a low level, and the output driver 53 of a read circuit 40 is enabled in response to a detection signal DET having a low level in a data phase.

An output signal of the first AND gate 31 is a low level. A read/write signal SMI_data_Rd_Wr having a low level is input to an input terminal of a first inverter 41. Accordingly, a second AND gate 43 outputs an output signal having a high level in response to an initializing enable signal SMI_EN having a high level and an output signal of the first inverter 41 having a high level. A latch circuit 61 of a detection circuit 60 of FIG. 5 outputs a signal having a low level in response to the read/write signal SMI_data_Rd_Wr and a clock signal PCLK, and a third inverter 63 connected to an output terminal Q of the latch circuit 61 outputs a signal having a high level. Accordingly, a fourth AND gate 65 outputs a detection signal DET having a high level.

A first OR gate 33 of a write circuit 30 outputs a signal having a high level in response to an output signal of a first AND gate 31 having a low level, a detection signal DET having a high level, and a normal transmission operation enable signal NTOE having a low level. An input driver 35 activated in response to the first OR gate 33 having a high level may transmit a read address READ ADDR1 input through a data bus DATA[7:0] to a first de-multiplexer 39.

A second OR gate 37 outputs a write enable signal WE having a high level in response to an output signal of the first AND gate 31 having a low level and a detection signal DET having a high level. Subsequently, the first de-multiplexer 39 may transmit a read address READ ADDR1 output from the input driver 35 to the PHY register 70 in response to the write enable signal WE having a high level. According to embodiments, the write circuit 30 may further include a decoder(not shown) for decoding a read address READ ADDR1 output from the first de-multiplexer 39.

A third AND gate 47 outputs a signal having a low level in response to an output signal RE of a second AND gate 43 having a high level and an output signal of a second inverter 45 having a low level. A third OR gate 49 outputs a signal having a low level to an output driver 53 in response to an output signal of the third AND gate 47 having a low level and a normal receiving operation enable signal NROE having a low level. Then, the output driver 53 is disabled.

A second multiplexer 51 connects a first input terminal 1 and an output terminal in response to an output signal RE of the second AND gate 43 having a high level, i.e., a read enable signal. In case of an initializing read operation differently from an initializing write operation, data bus turnaround time exists between an address phase and a data phase.

The data bus turnaround time is a time needed to handover an ownership or a right to use on a data bus DATA[7:0] from the MAC 12 to the PHY 14. The data bus turnaround time is a clock cycle 1t_{CLKP} at minimum and is 31 clock cycles 31*t_{CLKP} at maximum.

Continuously, an operation of the PHY 14 in a data phase may be explained as follows. Since the latch circuit 61 of the detection circuit 60 outputs a signal having a high level, a fourth AND gate 65 outputs a detection signal DET having a low level. Accordingly, each OR gate 33 and 37 outputs a signal having a low level and the input driver 35 is disabled in response to an output signal of the first OR gate 33 having a low level.

Since a second inverter 45 outputs a signal having a high level, the third AND gate 47 outputs a signal having a high level to the third OR gate 49 in response to an output signal of the second AND gate 43 having a high level and an output signal of the second inverter 45 having a high level. Accordingly, an output driver 53 is enabled.

In an address phase, the second multiplexer 51 transmits a read data READ DATA1 output from the PHY register 70 designated by a read address READ ADDR1 to the output driver 53 in response to a read enable signal RE having a high level. Accordingly, the enabled output driver 53 may transmit a read data READ DATA1 output from the second multiplexer 51 to the MAC 12 through a data bus DATA[7:0] in response to a clock signal PCLK.

When an initializing read operation is finished, the MAC 12 transmits an initializing enable signal SMI_EN having a low level to the PHY 14 through a data line 23. Accordingly, the PHY 14 may recognize termination of the initializing read operation.

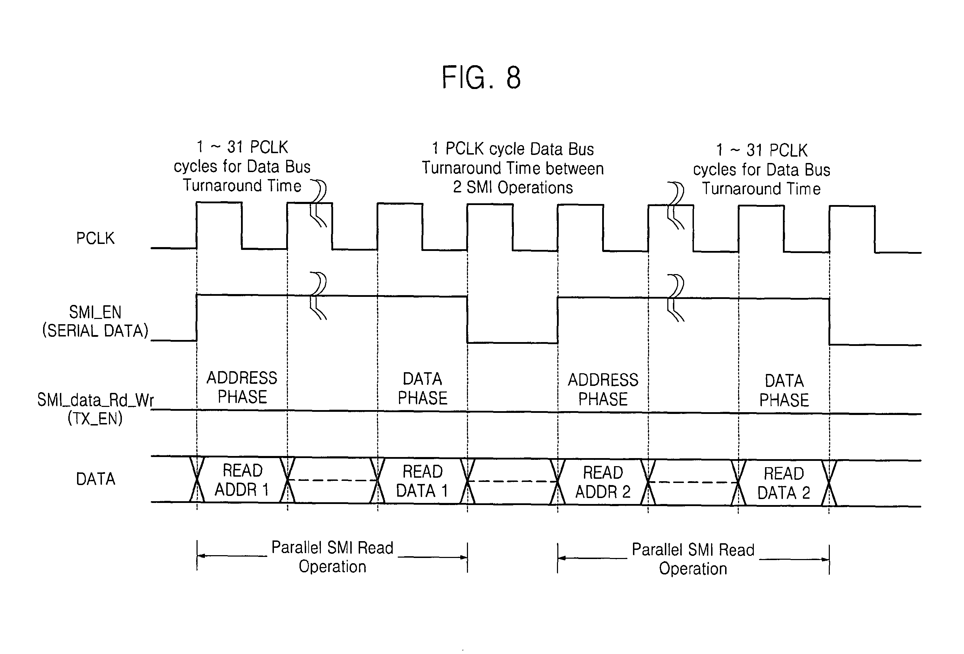

FIG. 8 illustrates still another example embodiment of a timing diagram of initializing operations using a MAC-PHY interfacing method of a system including the PHY illustrated in FIG. 4. FIG. 8 illustrates a timing diagram where two initializing operations, i.e., a first initializing read operation and a second initializing read operation, are performed. There is data bus turnaround time between the first initializing read operation and the second initializing read operation. The data bus turnaround time is time required to handover an ownership or a right to use on a data bus DATA[7:0] from the PHY 14 to the MAC 12 and corresponds to a cycle of a clock signal PCLK.

In an address phase of the first initializing read operation, the MAC 12 transmits a read address READ ADDR1 to the PHY 14 through the data bus DATA[7:0]. Data bus turnaround time exists between an address phase of the first initializing read operation and a data phase of the first initializing read operation. The data bus turnaround time is a period from a cycle(minimum) to 31 cycles(maximum) of a clock signal PCLK.

After the data bus turnaround time is elapsed, the PHY 14 transmits a read data READ DATA read from the PHY register 70 designated by a read address READ ADDR1 to the MAC 12 through the data bus DATA[7:0] in a data phase of the first initializing read operation.

Before the second initializing read operation is performed after termination of the first initializing read operation, the MAC 12 outputs an initializing enable signal SMI_EN having a low level to the PHY 14 for a cycle of a clock signal PCLK. Here, an ownership of the data bus DATA[7:0] is transferred from the PHY 14 to the MAC 12 and the PHY 14 recognizes termination of the first initializing read operation. In an address phase of the second initializing read operation, the MAC 12 transmits a read address READ ADDR2 to the PHY 14 through a data bus DATA[7:0]. Data bus turnaround time exists between an address phase of the second initializing read operation and a data phase of the second initializing read operation. The data bus turnaround time is from a cycle (minimum) to 31 cycles (maximum) of a clock signal PCLK.

After the data bus turnaround time is elapsed, the PHY 14 transmits a read data READ DATA read from the PHY register 70 designated by a read address READ ADDR2 to the MAC 12 through the data bus DATA[7:0] in a data phase of the second initializing read operation. When the second initializing read operation is finished, the MAC 12 outputs an initializing enable signal SMI_EN having a low level to the PHY 14. Accordingly, the PHY 14 may recognize termination of the second initializing read operation.

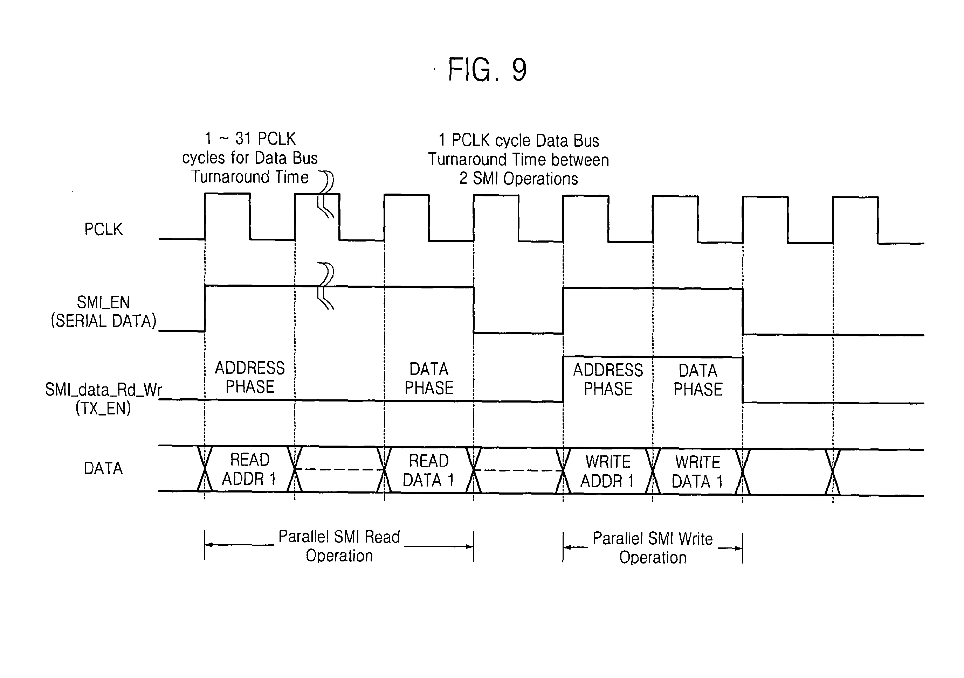

FIG. 9 illustrates still another example embodiment of a timing diagram of initializing operations using a MAC-PHY interfacing method of a system including the PHY illustrated in FIG. 4. FIG. 9 illustrates a timing diagram where two initializing operations, i.e., an initializing read operation and an initializing write operation, are performed. Data bus turnaround time is between the initializing read operation and the initializing write operation.

The data bus turnaround time is time to handover ownership on the data bus DATA[7:0] from the PHY 14 to the MAC 12 and corresponds to a cycle of a clock signal PCLK.

In an address phase of the initializing write operation, the MAC 12 having an ownership on the data bus DATA[7:0] transmits a write address WRITE ADDR1 to the PHY 14 through the data bus DATA[7:0]. In the address phase of the initializing write operation, the PHY 14 writes a write data WRITE DATA input through the data bus DATA[7:0] on the PHY register 70 designated by the write address WRITE ADDR1. When the initializing write operation is finished, the MAC 12 outputs an initializing enable signal SMI_EN having a low level to the PHY 14. Accordingly, the PHY 14 may recognize termination of the initializing write operation.

FIG. 10 illustrates an example embodiment of a timing diagram of initializing operations and a normal transmission operation using a MAC-PHY interfacing method of a system including the PHY illustrated in FIG. 4. FIG. 10 illustrates a timing diagram for explaining an initializing write operation, a normal transmission operation, and an initializing read operation, which are successively performed. During the normal transmission operation, a normal transmission operation enable signal NTOE is a high level and a normal receiving operation enable signal NROE is a low level.

To perform the initializing write operation and the initializing read operation, a MAC 12 outputs an initializing enable signal SMI_EN having a high level to a PHY 14 through a signal line 23 of a management interface 22, and the MAC 12 outputs the initializing enable signal SMI_EN having a low level to the PHY 14 through the signal line 23 of the management interface 22 to perform a normal transmission operation. Moreover, the MAC 12 outputs a read/write enable signal SMI_data_Rd_Wr having a high level to the PHY 14 through a signal line 17 of a control interface 16 to perform the initializing write operation, and the MAC 12 outputs the read/write enable signal SMI_data_Rd_Wr having a low level to the PHY 14 through the signal line 17 of the control interface 16 after the initializing write operation is finished.

To perform a normal transmission operation, the MAC 12 outputs a transmission enable signal TX-EN having a high level to the PHY 14 through the signal line 17 of the control interface 16, outputs a PHY active signal PHY_ACTIVE having a high level to the PHY 14 through a corresponding signal line of the control interface 16, and outputs a data enable signal DATA_EN to the PHY 14 through a data interface 18. While the data enable signal DATA_EN maintains a high level, the MAC 12 outputs a payload header and a payload data to the PHY 14 through the data bus DATA[7:0].

Referring to FIG. 4, since the MAC 12 outputs an initializing enable signal SMI_EN having a low level to the PHY 14 through a signal line 23 of a management interface 22, a first AND gate 31outputs a signal having a low level. Additionally, a detection circuit 60 of FIG 5 outputs a detection signal DET having a low level. Since a normal transmission operation enable signal NTOE having a high level is input to a first OR gate 33, the first OR gate 33 outputs a signal having a high level to an input driver 35. Subsequently, the enabled input driver 35 outputs a payload header Payload Hdr and a payload data Payload Data input through the data bus DATA[7:0] to the first de-multiplexer 39.

A second OR gate 37 outputs a write enable signal WE having a low level to the first de-multiplexer 39 in response to an output signal of the first AND gate 31 having a low level and a detection signal DET having a low level. Accordingly, the first de-multiplexer 39 outputs the payload header Payload Hdr and the payload data Payload Data input through the input driver 35 to inside of the PHY 14 as a normal operation write data NOWD. Subsequently, the PHY 14 may transmit the payload header and the payload data to outside trough an antenna.

Here, each AND gate 43 and 47 outputs a signal having a low level respectively. Accordingly, a third OR gate 49 outputs a signal having a low level to an output driver 53 in response to an output signal of a third AND gate 47 having a low level and a normal receiving operation enable signal NOWD having a low level. Accordingly, the output driver 53 is disabled. Explanation of an initializing read operation is the same as what is explained referring to FIGS. 7 to 9.

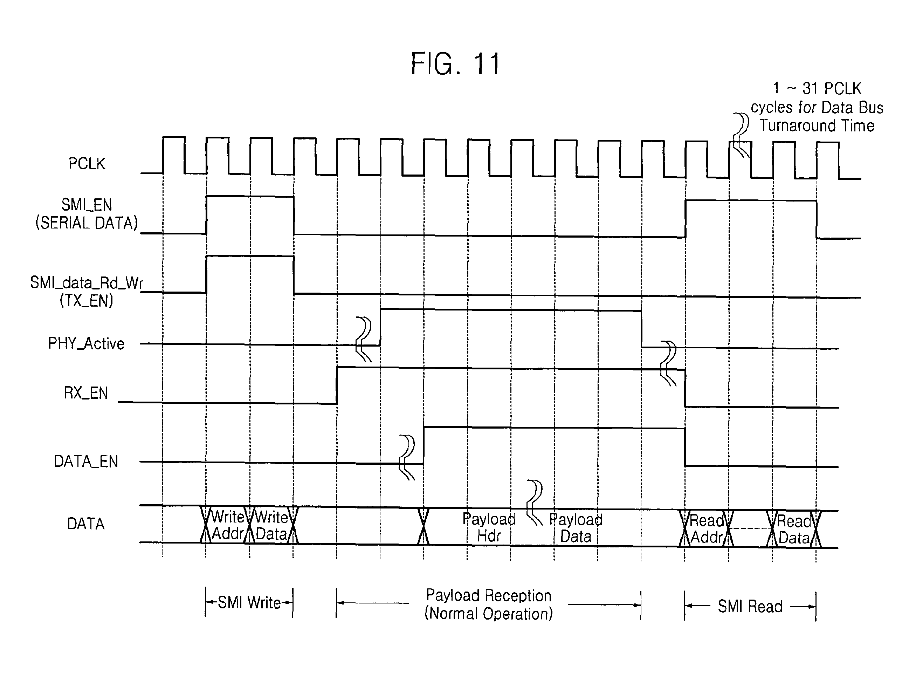

FIG. 11 illustrates another example embodiment of a timing diagram of initializing operations and a normal receiving operation using a MAC-PHY interfacing method of a system including a PHY illustrated in FIG. 4. FIG. 11 illustrates a timing diagram for explaining an initializing write operation, a normal receiving operation, and an initializing read operation, which are successively performed.

During the normal receiving operation, a normal transmission operation enable signal NTOE becomes a low level and a normal receiving operation enable signal NROE becomes a high level. To perform an initializing write operation and an initializing read operation, the MAC 12 outputs an initializing enable signal SMI_EN having a high level to the PHY 14 through a signal line 23 of a management interface 22, and the MAC 12 outputs the initializing enable signal SMI_EN having a low level to the PHY 14 through the signal line of the management interface 22 to perform a normal receiving operation.

In addition, to perform an initializing write operation, the MAC 12 outputs a read/write enable signal SMI_data_Rd_Wr having a high level to the PHY 14 through a signal line 17 of a control interface 16, and the MAC 12 outputs the read/write enable signal SMI_data_Rd_Wr having a low level to the PHY 14 through the signal line 17 of the control interface 16 after the initializing write operation is finished.

To perform a normal receiving operation, the MAC 12 outputs a transmission enable signal TX_EN having a low level to the PHY 14 through the signal line 17 of the control interface 16, outputs a PHY active signal PHY_ACTIVE having a high level to the PHY 14 through a corresponding signal line of the control interface 16, and outputs a data enable signal DATA_EN to the PHY 14 through a corresponding signal line of a data interface 18. While the data enable signal DATA_EN maintains a high level, the MAC 12 may receive a payload header and a payload data from the PHY 14 through a data bus DATA[7:0].

Referring to FIG. 4, since the MAC 12 outputs an initializing enable signal SMI_EN having a low level to the PHY 14 through a signal line 23 of a management interface 22, a first AND gate 31 outputs a signal having a low level. In addition, a detection circuit 60 of FIG. 5 outputs a detection signal DET having a low level. An input driver 35 is disabled in response to an output signal of a first OR gate 33 having a low level.

A second de-multiplexer 51 transmits a normal operation read data NORD, which is transmitted from inside or outside of the PHY 14, to an output driver 53 in response to an output signal of a second AND gate 43. Since a normal receiving operation enable signal NROE is a high level, a third OR gate 49 outputs a signal having a high level to the output driver 53. The enabled output driver 53 transmits the normal operation read data NORD input through the second de-multiplexer 51, i.e., a payload header Payload Hdr and a payload data, to the MAC 12 through a data bus DATA[7:0].

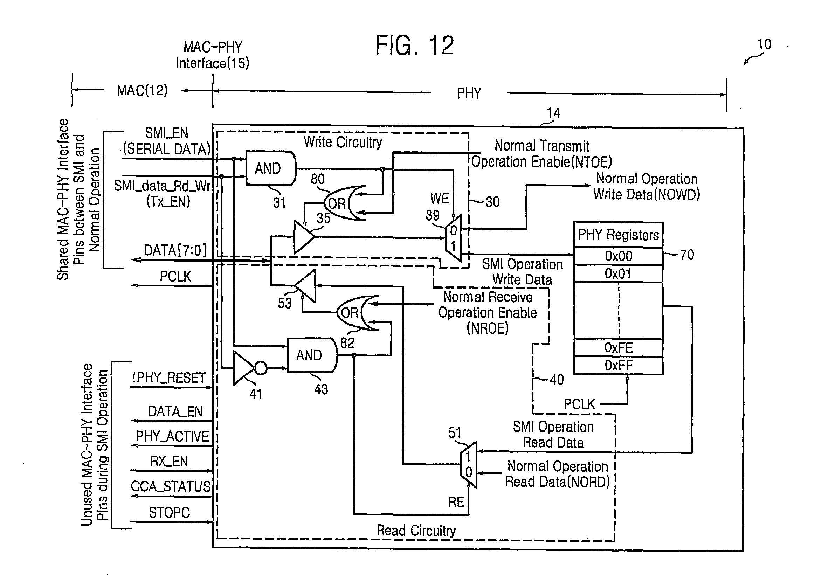

FIG. 12 illustrates a block diagram showing another example embodiment of a PHY illustrated in FIG. 3. Referring to FIGS. 3 and 12, a system 10 may include a MAC 12, a PHY 14, a MAC-PHY interface 15 for interfacing interface signals by being connected between the MAC 12 and the PHY 14. The PHY 14 includes a write circuit 30, a read circuit 40 and a PHY register 70.

Referring to FIGS. 3, 6, and 12, a write circuit 30 receives and decodes a write address WRITE ADDR1 input through a data bus DATA[7:0] in an address phase of an initializing write operation. The write circuit 30 writes a write data WRITE DATA1 input through the data bus DATA[7:0] to the PHY register 70 designated by the decoded write address in a data phase of the initializing write operation.

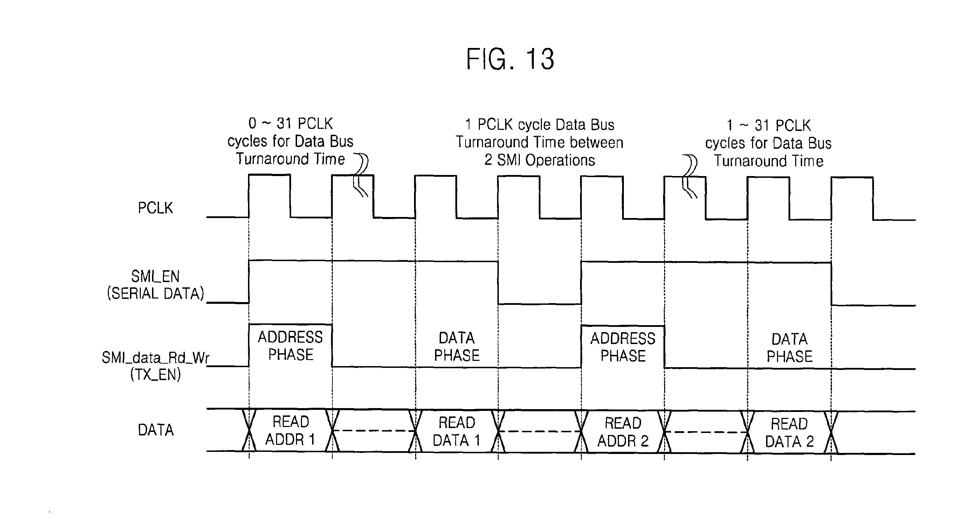

FIG. 13 shows an example embodiment of a timing diagram of initializing operations using a MAC-PHY interfacing method of a system including a PHY illustrated in FIG. 12. FIG. 13 is a timing diagram for explaining a first initializing read operation and a second initializing read operation, which are performed successively. There is data bus turnaround time between the first initializing read operation and the second initializing read operation. The first initializing read operation may be explained as follows referring to FIGS. 3, 12, and 13.

When an initializing enable signal SMI_EN is a high level, a first initializing read operation is performed. The normal transmission operation enable signal NTOE and the normal receiving operation enable signal NROE are low levels.

Above all, an operation of the PHY 14 in an address phase may be explained as follows. A read/write signal SMI_data_Rd_Wr has a high level. According to the read/write signal SMI_data_Rd_Wr having a high level, an input driver 35 of a write circuit 30 is enabled and an output driver 53 of a read circuit 40 is disabled. When the read/write signal SMI_data_Rd_Wr having a high level is input to a first AND gate 31 of the PHY 14 from the MAC 12, the fist AND gate 31 outputs a write enable signal WE having a high level and a second AND gate 43 outputs a read enable signal RE having a low level.

Since the write enable signal WE having a high level is input to a first OR gate 80, the first OR gate 80 outputs a signal having a high level to the input driver 35. Accordingly, the input driver 35 transmits a read address READ ADDR1 input through the data bus DATA[7:0] to a first de-multiplexer 39.

The first de-multiplexer 39 may transmit the read address READ ADDR1 to the PHY register 70 in response to the write enable signal WE having a high level. According to embodiments, a write circuit 30 may further include a decoder (not shown) for decoding the read address READ ADDR1 output from the first de-multiplexer 39. There is data bus turnaround time between an address phase and a data phase. The data bus turnaround time is from a cycle of a clock signal PCLK to 31 cycles of the clock signal PCLK. During the data bus turnaround time, an ownership or a right to use on the data bus DATA[7:0] is handed over from the MAC 12 to the PHY 14.

Continuously, an operation of the PHY 14 in a data phase may be explained as follows. A read/write signal SMI_data_Rd_Wr has a low level. According to a read/write signal SMI_data_Rd_Wr having a low level, the input driver 35 of the write circuit 30 is disabled and the output driver 53 of the read circuit 40 is enabled.

When the read/write signal SMI_data_Rd_Wr having a low level is input to a first AND gate 31 of the PHY 14 from the MAC 12, the first AND gate 31 outputs a write enable signal WE having a low level and a second AND gate 43 outputs a read enable signal RE having a high level. Since the read enable signal RE having a high level is input to a second de-multiplexer 51, a read data output from a PHY register 70 designated by a read address READ ADDR1 is transmitted to an output driver 53. Since the read enable signal RE having a high level is input to a second OR gate 82, the second OR gate 82 outputs a signal having a high level to the output driver 53. Accordingly, the output driver 53 transmits a read data READ DATA1 transmitted from the second de-multiplexer 51 to the MAC 12 through a data bus DATA[7:0].

After a first initializing read operation is finished, the MAC 12 transmits an initializing enable signal SMI_EN having a low level to the PHY 12 through a signal line 23 during a cycle of a clock signal PCLK. The initializing enable signal SMI_EN having a low level may perform a function of indicating termination of the first initializing read operation. The one cycle of a clock signal PCLK is called data bus turnaround time. During the data bus turnaround time, an ownership or a right to use on the data bus DATA[7:0] is handed over from the PHY 14 to the MAC 12. A second initializing read operation is performed the same as the first initializing read operation. Therefore, detailed explanation thereof is omitted.

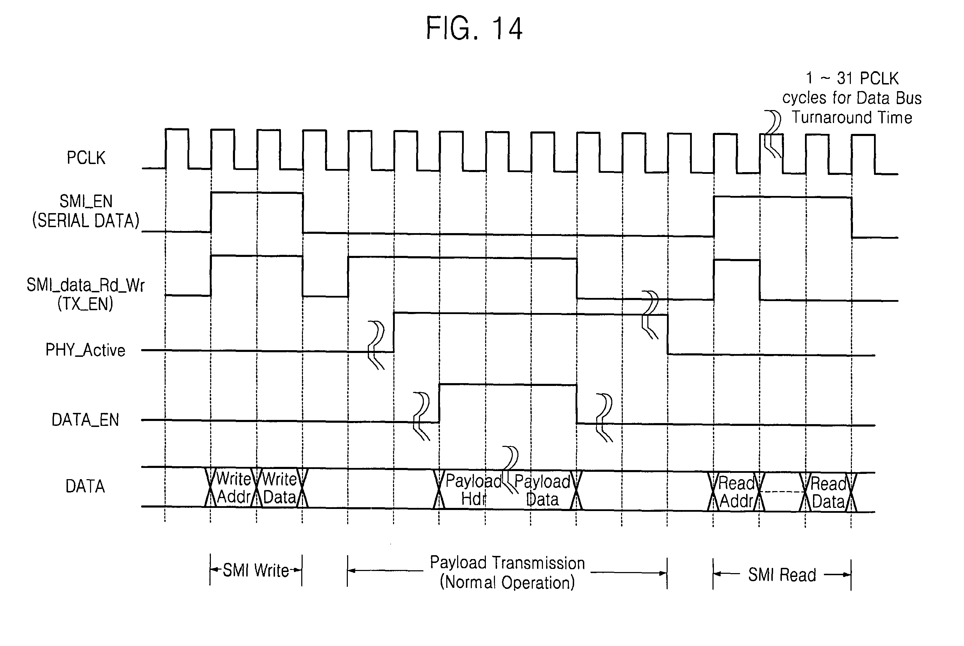

FIG. 14 shows an example embodiment of a timing diagram of an initializing operation and a normal transmission operation using a MAC-PHY interfacing method of a system including a PHY illustrated in FIG. 12. FIG. 14 is a timing diagram for explaining an initializing write operation, a normal transmission operation, and an initializing read operation, which are performed successively.

Referring to FIGS. 12 and 14, a normal transmission operation enable signal NTOE becomes a high level and a normal receiving operation enable signal NROE becomes a low level during the normal transmission operation. When an initializing enable signal SMI_EN and a read/write signal SMI_data_Rd_Wr are high levels respectively, an initializing write operation is performed. When the initializing enable signal SMI_EN is a low level, a transmission enable signal TX_EN input through a signal line 17 of a control interface 16 is a high level, and a PHY active signal PHY_ACTIVE and a data enable signal DATA_EN are respectively a high level, a normal transmission operation is performed.

Referring to FIG. 12, since a normal transmission operation enable signal NTOE having a high level is input to a first OR gate 33, the first OR gate 33 outputs a signal having a high level to an input driver 35. Accordingly, the enabled input driver 35 outputs a payload header Payload Hdr and a payload data Payload Data input through the data bus DATA[7:0] to a first de-multiplexer 39.

In response to an output signal WE of a first AND gate 31 having a low level, the first de-multiplexer 39 outputs a payload header Payload Hdr and a payload data Payload Data input through an input driver 35 to inside of the PHY 14 as a normal operation write data NOWD. Accordingly, the PHY 14 may transmit a payload header ad a payload data to outside through an antenna.

An initializing read operation illustrated in FIG. 14 is the same as an initializing read operation explained referring to FIG. 13, so the explanation thereof is omitted.

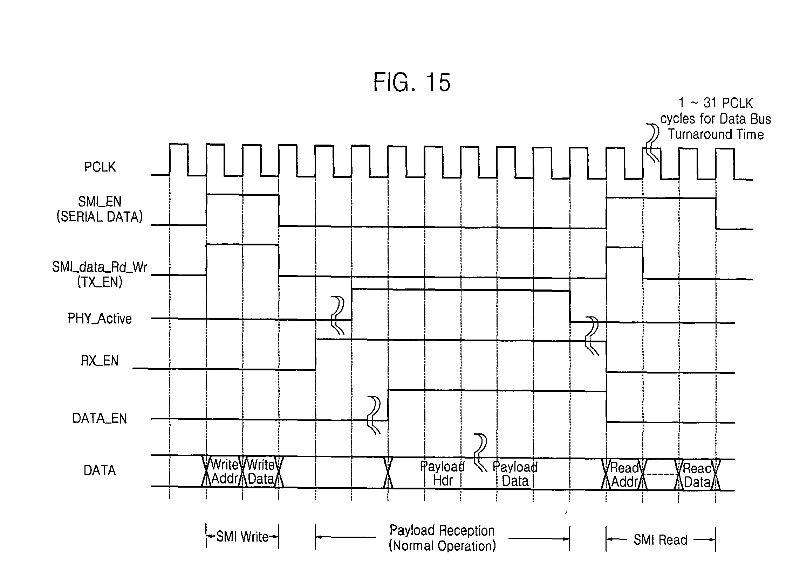

FIG. 15 shows another example embodiment of a timing diagram of an initializing operation and a normal receiving operation using a MAC-PHY interfacing method of a system including a PHY illustrated in FIG. 12. FIG. 15 is a timing diagram for explaining an initializing write operation, a normal receiving operation, and an initializing read operation, which are successively performed.

Referring to FIGS. 12 and 15, a normal transmission operation enable signal NTOE becomes a low level and a normal receiving operation enable signal NROE becomes a high level during the normal receiving operation. When an initializing enable signal SMI_EN and a read/write signal SMI_data_Rd_Wr are respectively a high level, the initializing write operation is performed. When the initializing enable signal SMI_EN and a transmission enable signal TX_EN, which is input through a signal line 17 of a control interface 16, are low levels respectively, and a PHY active signal PHY_ACTIVE and a data enable signal DATA_EN are respectively a high level, the normal receiving operation is performed.

Referring to FIGS. 12 and 15, the first OR gate 33 transmits a signal having a low level to the input driver 35 in response to an output signal WE of the first AND gate 31 having a low level and the normal transmission operation enable signal NTOE having a low level. Accordingly, the input driver 35 is disabled. The second AND gate 43 outputs a read enable signal RE having a low level.

Subsequently, a second de-multiplexer 51 transmits a payload header and a payload data input from inside or outside of the PHY 14 to an output driver 53. Since a normal receiving operation enable signal NROE having a high level is input to a first OR gate 33, the first OR gate 33 outputs a signal having a high level to the output driver 53. Accordingly, the enabled output driver 53 transmits a payload header and a payload data transmitted from the second de-multiplexer 51 to the MAC 12 through the data bus DATA[7:0].

An initializing read operation illustrated in FIG. 15 is the same as an initializing read operation explained referring to FIG. 13, so an explanation thereof is omitted.

Since the MAC and the PHY included in a system according to embodiments of the present invention do not include logics such as a serial to parallel converter and a parallel to serial converter, a size of the MAC and the PHY may be reduced respectively. Since the MAC and the PHY according to embodiments of the present invention do not include the logics respectively, gate count may be reduced. Since the MAC and the PHY according to embodiment of the present invention do not include the logics respectively, power consumption may be reduced.

In case of using an interfacing method and an interface according to embodiments of the present invention, an address phase and a data phase are performed in a cycle of a clock signal respectively, so that access time for accessing a PHY register may be reduced.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A system comprising:
a media access control (MAC) configured to output an address, a read/write signal, an initializing enable signal, and a write data;
a physical layer (PHY) configured to output a read data; and
an interface connected between the MAC and the PHY,
wherein the interface comprises:
a parallel data bus configured to transmit the address to the PHY in an address phase, and to transmit the write data to the PHY or transmit the read data to the MAC in a data phase; and
a first signal line configured to transmit the read/write signal to the PHY

2. The system of claim 1, further comprising a second signal line configured to transmit the initializing enable signal to the PHY.

3. The system of claim 1, wherein the MAC transmits the address and the write data to the PHY in two clock cycles.

4. The system of claim 1, wherein the PHY transmits the read data to the MAC in a clock cycle.

5. The system of claim 1, wherein the PHY transmits the read data to the MAC in a clock cycle after a turnaround time has passed during an initializing read operation.

6. The system of claim 1, wherein the PHY comprises:
a register; and
a write circuit configured to write the write data in a first storing region of the register designated by the address in the data phase.

7. The system of claim 6, wherein the PHY further comprises a read circuit configured to read and transmit the read data stored in a second storing region of the register, which is designated by the address in the data phase to the MAC.

8. A method of transferring signals between a media access controller (MAC) and a physical layer (PHY) on an interface that includes a parallel data bus for the transmission of data signals in parallel between the MAC and the PHY, comprising:
initiating, at the MAC, a PHY register transaction, by providing, at the MAC, a PHY register address in parallel on the parallel data bus and a control signal on a serial control signal line to request the PHY register transaction, the PHY register transaction comprising one of a PHY register write operation and a PHY register read operation;
in the event the control signal requests a PHY register write operation, the MAC next providing PHY register data signals in parallel on the parallel data bus to program a PHY register having the PHY register address; and
in the event the control signal requests a PHY register read operation, the PHY next providing PHY register data signals in parallel on the parallel data bus for the PHY register having the PHY register address.

9. The method of claim 8, wherein in the event the control signal requests a PHY register write operation, the MAC further provides a data control signal on the serial control line to indicate the availability of the PHY register data signals on the parallel data bus.

10. The method of claim 8, wherein in the event the control signal requests a PHY register read operation, the PHY further provides a data control signal on the serial control line to indicate the availability of the PHY register data signals on the parallel data bus.

11. The method of claim 8, wherein the control signal comprises a synchronization bit that indicates the initiation of a PHY register transaction, and wherein another control signal provided by the MAC indicates whether the initiated PHY register transaction is a PHY register read operation or a PHY register write operation.

12. The method of claim 8, wherein the PHY register address comprises eight bits and the parallel data bus is eight-bits wide.

13. The method of claim 8, wherein the PHY register data comprises eight bits and the parallel data bus is eight-bits wide.

14. The method of claim 8, wherein the MAC transmits the PHY register address and the PHY register data signals to the PHY within two clock cycles.
